# EUROPÄISCHE PATENTSCHRIFT

(11) **EP 0 786 297 B1**
(45) Veröffentlichungstag und Bekanntmachung des Hinweises auf die Patenterteilung: **05.12.2001**
(21) Anmeldenummer: 97100484.1
(22) Anmeldetag: 15.01.1997
(51) Int. Cl.: B21J 9/18, B30B 1/26, B21D 28/00

(54) **Antriebseinrichtung für eine Umformmaschine**
Drive for a forming machine
Mécanisme d'entraînement pour une machine de formage

(30) Priorität: 16.01.1996 DE 19601300
(43) Veröffentlichungstag der Anmeldung: 30.07.1997
(73) Patentinhaber: Verein Deutscher Werkzeugmaschinenfabriken e.V. (VDW), 60325 Frankfurt am Main (DE)
(72) Erfinder: Doege, Eckart, Prof. Dr.-Ing., 30966 Hemmingen (DE); Hindersmann, Martin, Dipl.-Ing., 30419 Hannover (DE); Keller, Ulrich, Dipl.-Ing., 31303 Burgdorf (DE)
(74) Vertreter: König, Norbert

(56) Entgegenhaltungen:
- DE-A- 4 103 946
- DE-A- 4 337 413
- PATENT ABSTRACTS OF JAPAN vol. 11, no. 333 (M-637), 30.Oktober 1987 & JP 62 114742 A (ASAHI OKUMA IND CO LTD), 26.Mai 1987,
- PATENT ABSTRACTS OF JAPAN vol. 10, no. 267 (M-516), 11.September 1986 & JP 61 092800 A (TAMAGAWA KIKAI KK), 10.Mai 1986,
- PATENT ABSTRACTS OF JAPAN vol. 13, no. 400 (M-867), 6.September 1986 & JP 11 043797 A (MITSUMI ELECTRIC CO LTD)

## Beschreibung

Die Erfindung betrifft eine Antriebseinrichtung der im Oberbegriff des Anspruchs 1 genannten Art für eine Umformmaschine, beispielsweise eine Presse.

Bei der Bearbeitung von Werkstücken auf Pressen werden verschiedenartige Verfahren für verschiedenartige Werkstücke aus unterschiedlichen Werkstoffen angewendet. Der Fülle der Bearbeitungsverfahren stehen seitens der Pressen verschiedene Antriebsprinzipien gegenüber, um den jeweiligen technologischen Anforderungen Rechnung zu tragen.

Beispielsweise ist es bei einem Tiefziehvorgang an großen Karosserieteilen mit entsprechend massereichen Werkzeugteilen immer wünschenswert, das Auftreffen der Werkzeuge auf das umzuformende Material zu Beginn des Tiefziehvorgangs mit möglichst geringer Geschwindigkeit zu gestalten. Ein anderenfalls auftretender sogenannter Auftreffstoß zwischen Niederhalter und Ziehmatrize beeinträchtigt eine optimale Schmierfilmausbildung und ist daher für den Verfahrensablauf schädlich. Weiterhin führt dieser Auftreffstoß zu einer beträchtlichen, unerwünschten Lärmentwicklung. Ein starker Auftreffstoß erzeugt eine hohe Belastung der Presse, der Werkzeuge und der Zieheinrichtung.

Aus der "Wissenschaftlichen Zeitschrift der Technischen Universität Dresden, 40 (1991) Heft 3/4", ist ein hydromechanischer Hybridantrieb bekannt, bei dem Hydraulikzylinder in den Kraftfluß einer Kurbelpresse integriert sind, so daß die näherungsweise cosinusförmig verlaufende Bewegung des Pressenstößels durch eine zusätzliche Bewegung seitens der Hydraulikzylinder ergänzt ist. Die Bewegung der zusätzlichen Hydraulikzylinder im Kraftfluß ist in weiten Grenzen steuerbar, so daß es beispielsweise möglich ist, beim Tiefziehen von Karosserieteilen ein sanftes Aufsetzen des Niederhalters auf den Ziehring zu Beginn des Tiefziehvorgangs zu realisieren.

Ein Nachteil dieser bekannten Presse besteht darin, daß für die zusätzlichen Hydraulikzylinder im Kraftfluß des Antriebes der Presse zusätzlich zu dem mechanischen Teil der Presse im wesentlichen der komplette Hydraulik- und Steuerungsteil einer hydraulischen Presse erforderlich ist. Die bekannte Presse ist somit aufwendig im Aufbau und teuer in der Herstellung.

Bekannt sind ferner Kniehebelantriebe für Pressen, beispielsweise aus der Zeitschrift "Werkstatt und Betrieb, 124 (1991) Heft 5". Derartige Antriebe wurden u.a. konzipiert, um in der Nähe des unteren Umkehrpunktes der Pressen eine möglichst geringe, gegebenenfalls auch näherungsweise konstante Arbeitsgeschwindigkeit zu erzielen, wie sie beispielsweise bei Prägevorgängen gewünscht wird. Der mechanische Aufbau des Kniehebelgetriebes läßt jedoch nur geringe Freiheiten bei der kinematischen Auslegung des Pressenantriebs zu.

Ein weiterer Nachteil der bekannten Kniehebelantriebe besteht darin, daß mit ihnen kein schneller Leerhub erzielbar ist, so daß die Arbeitsgeschwindigkeit und damit die Produktivität der Presse in unerwünschter Weise verringert ist.

Ferner sind Gelenkantriebe für Pressen bekannt, die eine Mehrzahl gelenkig miteinander verbundener Hebel aufweisen, mittels derer eine gleichförmige Drehung einer Antriebswelle ungleichförmig auf den Stößel der Presse übertragen wird. Beispielsweise sind aus der DE-AS 1502326 und der DE-AS 2927503 komplexe Gelenkantriebe in der Form eines Einkurbelantriebs einer zweifachwirkenden Presse zum Tiefziehen bekannt, bei denen bei gleichförmiger Drehung der Kurbelwelle im Arbeitsbereich der Blechhalterstößel ruht, während der Ziehstößel mit näherungsweise gleichbleibender Arbeitsgeschwindigkeit herabfährt. Im Bereich des oberen Totpunktes ist die Geschwindigkeit beider Stößel stark verlangsamt, so daß für das Wechseln des Werkstückes ausreichend Zeit zur Verfügung steht. Die zwischen den beiden beschriebenen Bereichen verbleibenden Zonen des Leerhubes werden mit höherer Geschwindigkeit durchfahren, um für eine Bewegungsperiode eine kurze Gesamttaktzeit zu erreichen.

Ein Nachteil bei den bekannten Gelenkantrieben besteht darin, daß sie aus vielen Bauteilen bestehen und daher aufwendig sind, so daß die Herstellung dieser bekannten Gelenkantriebe und damit die Herstellung der Presse teuer ist. Außerdem ist aufgrund der Vielfalt der Gelenkantriebe eine serienmäßige Produktion erschwert. Der jeweilige Aufbau des Gelenkantriebes beeinflußt unmittelbar den Aufbau der übrigen Presse.

Trotz der Vielzahl bekannter Gelenkantriebe ist es in vielen Bereichen wünschenswert, die Anpassung des Bewegungsablaufs des Stößels an die Besonderheiten des jeweiligen Bearbeitungsverfahrens weiter zu verbessern. Dies trifft beispielsweise für das Warmschmieden zu. Dort ist man bestrebt, im unteren Totpunkt eine möglichst hohe Stößelgeschwindigkeit zu erzielen, um den infolge Werkzeugerwärmung beim Warmschmieden hohen Werkzeugverschleiß zu verringern. Dies ist mit den bekannten Gelenkantrieben aufgrund ihrer geringen Steifigkeit nicht möglich. Ein grundsätzlicher Nachteil der bekannten Gelenkantriebe besteht darin, daß aufgrund der großen Anzahl von Gliedern innerhalb der kinematischen Kette des Gelenkantriebes die Steifigkeit des Gelenkantriebes verringert ist. Dies führt dazu, daß ein Teil des von dem Gelenkantrieb bereitgestellten Energiebetrages in eine Auffederung der Presse einfließt und somit nicht für die Bearbeitung des Werkstückes zur Verfügung steht, was jedenfalls unerwünscht ist.

Eine Abwandlung der vorgenannten Bauarten ist in Antrieben mit Räderkoppelgetrieben zu finden, bei denen es sich um eine Kombination mehrgliedriger Gelenkantriebe mit wenigstens zwei Zahnrädern handelt. Sie unterscheiden sich von einem Gelenkantrieb mit vorgeschaltetem ortsfesten Zahnradgetriebe dadurch, daß die Zahnräder auf den Gelenkkurbeln befestigt oder gelagert sind und mit ihnen zusammen umlaufen. Beispielsweise ist aus der Zeitschrift "Der Konstrukteur, 24 (1993) Heft 11, Seiten 39 bis 40", ein solcher Antrieb für einen Ziehstößel einer Tiefziehpresse bekannt.

Der Bewegungsablauf eines entsprechenden Niederhalterstößels oder des Stößels einer Presse der Kaltmassivumformung kann mit einem Räderkoppelgetriebe erzeugt werden, wie es beispielsweise in der Zeitschrift "Konstruktion, 45 (1993), Heft 4, Seiten 117 bis 120", offenbart ist.

Die bekannten Räderkoppelgetriebe weisen die gleichen Nachteile auf wie bekannte Gelenkantriebe.

Unter den Maschinenelementen sind Zahnräder mit ovaler oder elliptischer Wälzkurve bekannt. Diese zählen genauso wie außermittig gelagerte runde Zahnräder zu den unrunden Zahnrädern. Als unrunde Zahnräder werden allgemein ungleichförmig, durch Vorgabe der Polbahnen (Wälzkurven) definiert übersetzende Wälzkurvengetriebe mit schwingendem oder umlaufendem Abtrieb bezeichnet, die durch Verzahnung der Wälzkurven formschlüssig miteinander arbeiten (vgl. Siemon, B.: Das exzentrisch gelagerte Zahnradpaar. Diss. Univ. Hannover 1981).

Die EP 0254958 A1 offenbart einen derartigen intermittierenden Antrieb, in dem ein Paar ovaler Zahnräder verwendet wird, die zentrisch gelagert sind.

Aus der DE 4103946 A1 ist ein mehrstufiges Getriebe mit mehreren elliptischen Zahnrädern bekannt, die gegeneinander verstellbar sind, um das Übersetzungsverhältnis des Gesamtgetriebes zu verändern. Als mögliche Einsatzgebiete eines solchen Getriebes sind Blutpumpenantriebe, Nebenantriebe von Brennkraftmaschinen und Tretkurbelantriebe, beispielsweise beim Fahrrad, vorgesehen.

Weiterhin ist aus der DE 4337413 C1 ein Getriebe mit unrunden Zahnrädern und Schwungrädern bekannt, das neben dem Antrieb einer Arbeitsmaschine insbesondere zum Speichern kinetischer Energie dient. Das Getriebe weist eine mittlere Übersetzung von eins auf, ist zweistufig ausgebildet und wirkt neben dem Abtrieb auf eine zusätzliche Speicherwelle mit einem separaten Schwungrad. Die Getriebekomponenten sind so aufeinander abgestimmt, daß die kinetische Energie des Gesamtsystems stets konstant ist. Bei Änderung der Bewegungsphase soll ein stoßhaftes Rückflankentragen der Zahnflanken vermieden werden.

Die vorgenannten Getriebe mit unrunden Zahnrädern stellen Speziallösungen vor allem für die Übertragung von im Vergleich zu Pressen kleinen Drehmomenten dar, so daß sie für Pressen nicht geeignet sind. Außerdem sind mit diesen Getrieben nicht die für Pressen notwendigen Übersetzungsverläufe und die angestrebten Stößelbewegungsgesetze erzielbar.

Die JP 62-114742 offenbart eine Antriebsvorrichtung für einen Stößel in einer Umformmaschine gemäß dem Oberbegriff des Anspruchs 1, unter Verwendung eines speziellen unrunden Zahnradpaares. Hierbei ist jedes der unrunden Zahnräder in seinem geometrischen Mittelpunkt drehbar gelagert. In Verbindung mit der Achsensymmetrie der Wälzkurven des beschriebenen unrunden Zahnradpaares führt dieses zu einer Stößelbewegung, die sich in Vor- und Rückhub in gleicher Weise wiederholt. Hierdurch kann die Stößelbewegung nicht über den gesamten Stößelhub optimiert werden, d. h. nicht nach Umformprozeß und Produktivität. Der Nachteil äußert sich darin, daß lediglich durch die langsamere Stößelgeschwindigkeit der Umformprozeß bei einigen Verfahren verbessert werden kann, jedoch andere Verfahren, die eine hohe Umfragegeschwindigkeit verlangen, nicht berücksichtigt werden. Darüber hinaus kann nur bei einer gegenüber dem konventionellen Kurbeltrieb gleichen Umformgeschwindigkeit des Stößels die Taktzeit zur Steigerung der Produktivität erhöht werden.

Aus der JP 11 04 37 97 ist eine Vorrichtung zum Pressen von Metall mit einem unten liegenden Antrieb bekannt, welcher ein unrundes, achsensymmetrisches, etwa ovales Zahnradpaar aufweist, bei dem der jeweilige Zahnraddrehpunkt auf einer Symmetrieachse liegt. Durch einen bestimmten, nicht näher bezeichneten Einstellwinkel der Kurbelwelle in Relation zur Symmetrie des unrunden Zahnradpaares wird ein nichtsymmetrischer Verlauf des Stößelhubes als Funktion des Drehwinkels des unrunden Antriebsrades erreicht. Aufgrund der symmetrischen Gestaltung der unrunden Zahnräder erlaubt diese bekannte Vorrichtung nur in sehr eingeschränkter Weise eine Annäherung der Stößelkinematik an die äußerst unterschiedlichen Anforderungen verschiedener Umformprozesse bezüglich Verfahrensgeschwindigkeit, Aufsetzgeschwindigkeit der Werkzeuge und gleichzeitiger Taktzeitoptimierung.

Durch die JP 61 09 28 00 ist eine Pulver-Formpresse bekannt, deren Antrieb ein Getriebe mit unrunden Zahnrädern aufweist. Die Wälzkurven dieser Zahnräder sind zu zwei aufeinander senkrecht stehenden Achsen achsensymmetrisch. Der Drehpunkt jedes Zahnrades ist mit seinem geometrischen Mittelpunkt identisch. Dies führt zu Stößelhub-Verläufen, bei denen der Niederhub mit der Umformung und der Aufwärtshub gleich sind. Damit zeigt diese Pulver-Formpresse die gleichen charakteristischen Eigenschaften wie die Vorrichtung nach der JP 62 11 47 42 und weist die gleichen Nachteile wie die zuvor beschriebene Vorrichtung auf. Aus der JP 61 09 28 00 ist ferner eine Ausführung bekannt, bei der ein doppelt achsensymmetrisches, ovales Abtriebszahnrad, dessen Drehpunkt wiederum seinem geometrischen Mittelpunkt entspricht, mit einem ebenfalls achsensymmetrischen Gegenrad gepaart ist, dessen Umfang der Hälfte des Abtriebszahnrades entspricht. Dadurch wird eine mittlere Zahnradübersetzung von 2 in die unrunde Zahnradstufe integriert. Hierdurch läßt sich zwar die vorgelegte Übersetzung reduzieren; eine Optimierung der Stößelkinematik nach umformtechnischen und zugleich wirtschaftlichen Aspekten ist aber nicht möglich, da der Verlauf der Übersetzungsverhältnisse nachteiligerweise bei einem Hub zweimal wiederholt und dadurch wiederum Nieder- und Aufwärtshub in gleicher Weise erfolgen.

Die Aufgabe der vorliegenden Erfindung besteht darin, einen Antrieb der betreffenden Art für eine Umformmaschine anzugeben, dessen Steifigkeit verbessert, dessen Aufbau vereinfacht und vereinheitlicht ist und der vor allem relativ leicht an spezifische Anforderungen verschiedener Umformungsvorgänge und der Produktivität anpaßbar ist.

Diese Aufgabe wird durch die im Anspruch 1 angegebene Erfindung gelöst.

Vorteilhafte und zweckmäßige Weiterbildungen sind in den Unteransprüchen angegeben.

Die Erfindung sieht ein Zahnrad-Getriebe mit periodisch variierendem Übersetzungsverhältnis, insbesondere unrunde Zahnräder im Vorgelege der Umformmaschine, beispielsweise einer Presse in Kombination mit einem Gelenkantrieb, vor. Das Übersetzungsverhältnis ist als Quotient der Antriebs- durch Abtriebsdrehzahl definiert. Dadurch ist es möglich, die Stößelkinematik in weiten Grenzen zu variieren und so exakt an den jeweils gewünschten, für das jeweilige Bearbeitungsverfahren optimalen Bewegungsablauf anzupassen. Hierzu ist in der Regel ein einfaches Schubkurbelgetriebe ausreichend. Der jeweils zu realisierende Bewegungsablauf des Stößels ist erfindungsgemäß durch eine geeignete Geometrie der Wälzkurven erzielt. Diese werden aus der gewünschten, verfahrensabhängigen Stößelkinematik berechnet. Die Form der Wälzkurven ist in weiten Grenzen nahezu beliebig wählbar und nicht an regelmäßige geometrische Formen gebunden. Hierdurch unterscheiden sie sich wesentlich von bekannten unrunden Zahnrädern. Ein weiterer wesentlicher Unterschied liegt in der Höhe der zu übertragenden Kräfte und Momente. Die kleinsten mittleren Zahnraddurchmesser von unrunden Zahnrädern für Antriebe von Umformmaschinen sind mindestens so groß wie die größten mittleren Durchmesser in den bekannten Anwendungsfällen. Das wegen seines einfachen Aufbaues vorzugsweise in den Umformmaschinen eingesetzte Schubkurbelgetriebe ist in seinem Arbeitsbereich kurz vor und besonders im unteren Totpunkt durch eine hohe Steifigkeit in seiner Längsrichtung ausgezeichnet, da sich seine Komponenten dann in Strecklage befinden. Sie werden somit auf Druck, nicht aber auf Biegung beansprucht.

Die mit der Erfindung erzielten Vorteile liegen vor allem darin, ein einfaches Lösungsprinzip für die verschiedensten Stößelhub-Verläufe in Abhängigkeit der unterschiedlichsten Bearbeitungsverfahren anwenden zu können. Von Vorteil für die Konstruktion und Herstellung derartiger Umformmaschinen, beispielsweise Pressen, erweist es sich, daß anstelle der früheren Gelenkpressen oder anderer aus vielen Bauteilen bestehenden und damit aufwendigen Antriebe nun Pressen mit einem häufig verwendeten Kurbeltrieb konzipiert werden können, der einfach im Aufbau und damit kostengünstig herstellbar ist. Die Anzahl von prinzipiell baugleichen Kurbelpressen, die in Kleinserie produziert werden können, ist auf diese Weise erhöht. Zugleich wird durch den Rückgriff auf Standardkonstruktionen die Auftragsdurchlaufzeit bei Konstruktion und Fertigung der Presse reduziert. Die Ausgestaltung dieser Kurbelpressen mit verschiedensten unrunden Zahnrädern im Vorgelege erlaubt damit bei gleichem Grundaufbau der Pressen verschiedenste Bewegungsabläufe des Pressenstößels. Es ist sogar möglich, durch schnelles Auswechseln der Zahnräder des Vorgeleges einer Presse eine völlig neue Bewegungscharakteristik des Pressenstößels zu erzielen.

Die Anordnung mehrerer paralleler Paare unrunder Zahnräder in Form eines Schaltgetriebes ermöglicht es, innerhalb kürzester Zeit von einem Bearbeitungsverfahren auf ein anderes umzuschalten. Bei einem mittleren Übersetzungsverhältnis abweichend von eins können die Funktionen der unrunden Zahnräder - die periodische Drehzahl- und Drehmomentwandlung - und die Funktionen eines herkömmlichen Vorgeleges mit runden Zahnrädern - die gleichförmige Drehzahl-/ Drehmomentwandlung - in denselben Bauteilen vereinigt werden. Hierdurch ergibt sich ein zusätzlicher erheblicher Einspareffekt, der mit dem erfindungsgemäßen Antrieb realisierbar ist.

Die Erfindung wird nachfolgend anhand der beigefügten Zeichnung, in der Ausführungsbeispiele dargestellt sind, näher erläutert.

Es zeigt:
- Fig. 1: ein erstes Ausführungsbeispiel der erfindungsgemäßen Antriebseinrichtung in schematischer Perspektivdarstellung,
- Fig. 2a: das Ausführungsbeispiel gemäß Fig. 1 in schematischer Seitenansicht,
- Fig. 2b: den Stößelhub-Verlauf eines von der Antriebseinrichtung gemäß Fig. 2a angetriebenen Stößels einer Umformmaschine in Abhängigkeit von den Drehwinkeln,
- Fig. 3: die Kombination eines unrunden Zahnradpaares mit einer Gelenkpresse, speziell einer Kniehebelpresse,
- Fig. 4: Kurvenverlauf für Stößelweg mit sehr geringer Arbeitsgeschwindigkeit,
- Fig. 5: Kurvenverlauf für Stößelweg mit extrem ausgeprägtem unteren Umkehrpunkt und
- Fig. 6: die Kombination eines unrunden Zahnradpaares und einer Gelenkpresse mit kurzem Stillstand im unteren Umkehrpunkt und die Veränderung der Gelenkkinematik durch unrunde Zahnräder.

Gleiche Bauteile in den Figuren der Zeichnung sind mit den gleichen Bezugszeichen versehen.

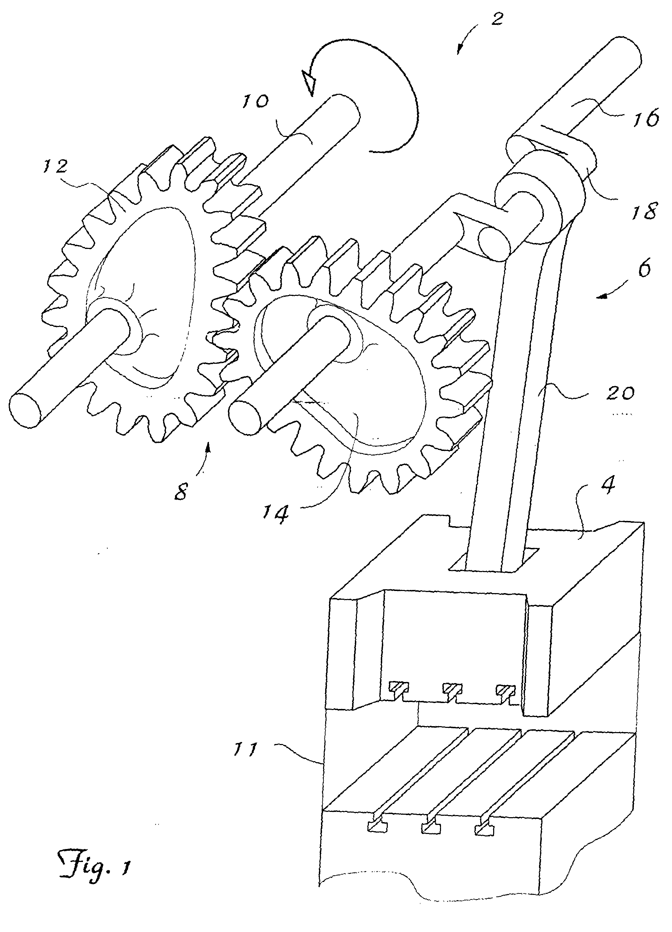

In Fig. 1 ist eine Antriebseinrichtung 2 dargestellt, bei der ein Stößel 4 einer in der Zeichnung nicht näher dargestellten Umformmaschine, beispielsweise Presse, über einen Kurbelantrieb 6 und ein Zahnrad-Getriebe 8 (nachfolgend abgekürzt Getriebe 8 genannt) mit einer Abtriebswelle 10 in Antriebsverbindung steht. Das Bezugszeichen 11 bezeichnet ein Gestell mit Bauteilen zur Stößelführung. Das Getriebe 8 weist bei diesem Ausführungsbeispiel ein drehfest mit der Antriebswelle 10 verbundenes erstes unrundes Zahnrad 12 (Antriebsrad) auf, das mit einem zweiten unrunden Zahnrad (Abtriebsrad) 14 kämmt. Unrunde Zahnräder im Sinne dieser Erfindung sind sowohl Zahnräder mit nichtkreisförmiger Wälzkurve als auch exzentrisch gelagerte Zahnräder mit kreisförmiger Wälzkurve. Das Abtriebsrad 14 ist drehfest mit einer Kurbelwelle 16 des Kurbeltriebes 6 verbunden. Die Kurbelwelle 16 weist einen Exzenter 18 auf, der gelenkig mit einem Ende eines Pleuels 20 verbunden ist, dessen anderes Ende gelenkig mit dem Stößel 4 verbunden ist. Das mittlere Übersetzungsverhältnis des durch das Antriebsrad 12 und das Abtriebsrad 14 gebildeten Getriebes 8 ist bei diesem Ausführungsbeispiel eins.

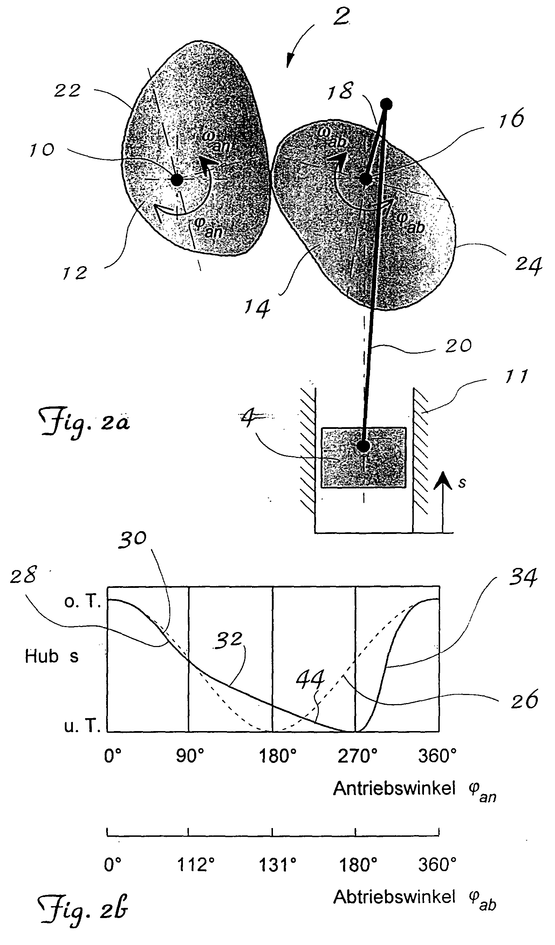

Anhand der Fig. 2a und 2b soll die Funktionsweise der Antriebseinrichtung 2 gemäß Fig. 1 näher erläutert werden:

In Fig. 2a sind die Zahnräder 12, 14 schematisch durch ihre Wälzkurven 22, 24 angedeutet, wobei die Verzahnungen weggelassen sind. Die Wälzkurve 22 des Antriebsrades 12 und die Wälzkurve 24 des Abtriebsrades 14 sind bei diesem Ausführungsbeispiel für den Fall ausgelegt, daß die Geschwindigkeit des Stößels 4 im Arbeitshub der Umformmaschine über einen längeren Zeitraum konstant bleiben soll. Eine derartige Kinematik für den Stößel 4 ist besonders vorteilhaft bei Umformvorgängen wie Tiefziehen und Fließpressen. Insbesondere beim Tiefziehen von Blechen für moderne Karosserien in Leichtbauweise gehen die Bestrebungen dahin, immer komplexere Teile in ständig verbesserter Qualität zu fertigen. Einer der Einflußfaktoren auf das Ziehergebnis ist der Geschwindigkeitsverlauf des Stößels 4 der Umformmaschine. Bei Betrieb der Umformmaschine führt die Antriebswelle 10 eine gleichförmige Drehbewegung aus. Bei der in Fig. 2a dargestellten Paarung zweier unrunder Zahnräder 12, 14 ist das Übersetzungsverhältnis so ausgelegt, daß der sich bei Verwendung runder Zahnräder ergebende in Fig. 2b gestrichelt eingezeichnete cosinusförmige Stößelhub-Verlauf 26 der Bewegung des Stößels 4 in den durch die Kurve 28 (Fig. 2b) dargestellten, gewünschten Verlauf geändert wird. Dies wird erreicht durch Vergrößerung des Übersetzungsverhältnisses im Bereich des Drehwinkels ϕ_{ab} des unrunden Abtriebsrades 14 zwischen ca. 120° und 176° bei gleichzeitiger Verkleinerung des Übersetzungsverhältnisses im Bereich des Drehwinkels ϕ_{ab} des unrunden Abtriebsrades 14 zwischen 176° und 360°. Hierdurch wird eine erhebliche Verbesserung der Arbeitsweise der Umformmaschine erzielt.

Das Bezugszeichen 44 bezeichnet den Arbeitsbereich der Stößelbewegung.

Eine weitere Anforderung beim Umformen von Werkstücken ist das sanfte Aufsetzen des am Stößel 4 befestigten Oberwerkzeugs auf das Werkstück. Bei einer hohen Aufsetzgeschwindigkeit können unzulässige Belastungen am Werkstück auftreten, die unter Umständen zu Beschädigungen am Werkzeug und Werkstück und damit zu Störungen des Umformvorganges führen. Durch die Verkleinerung des Übersetzungsverhältnisses der unrunden Zahnräder 12, 14 im Bereich des Eilvorlaufs, vgl. Bezugszeichen 30 in Fig. 2b, und durch die Vergrößerung des Übersetzungsverhältnisses im Bereich des Aufsetzens des Oberwerkzeugs auf das Werkstück, vgl. Bezugszeichen 32 in Fig. 2b, der in diesem Fall zwischen ca. 118° und 125° des Drehwinkels ϕ_{ab} des unrunden Abtriebsrades 14 liegt, sowie der Verkleinerung des Übersetzungsverhältnisses der unrunden Zahnräder 12 und 14 im gesamten Bereich des Eilrücklaufs, vgl. Bezugszeichen 34 in Fig. 2b, des Stößels 4 erfüllt das aufgezeigte Zahnradpaar diese Anforderungen.

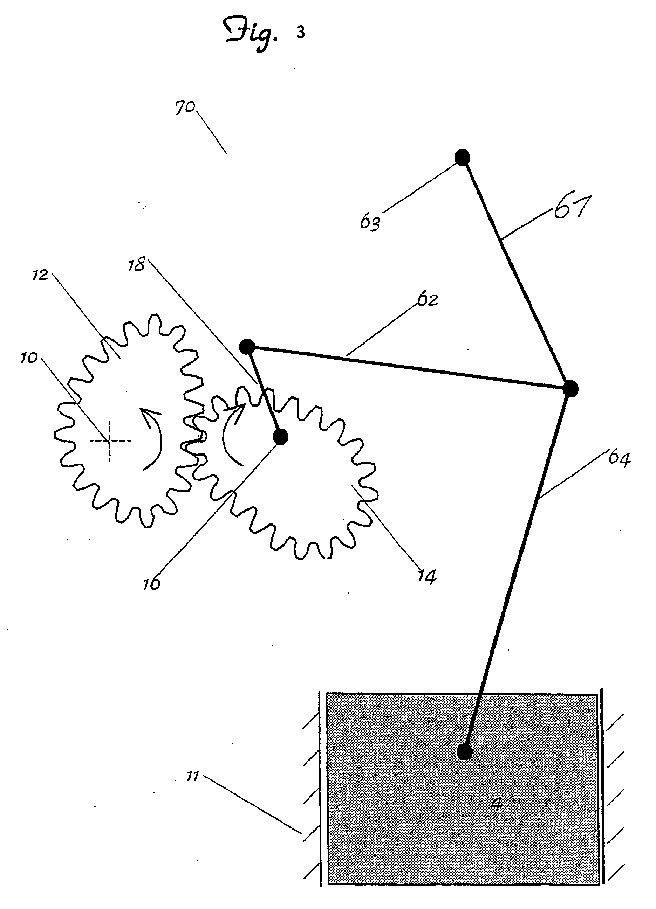

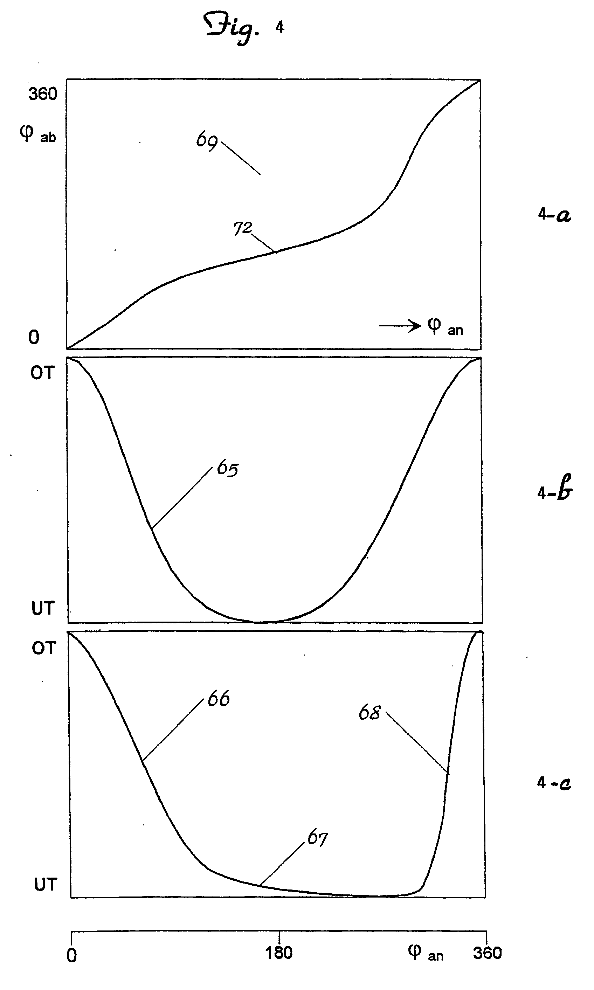

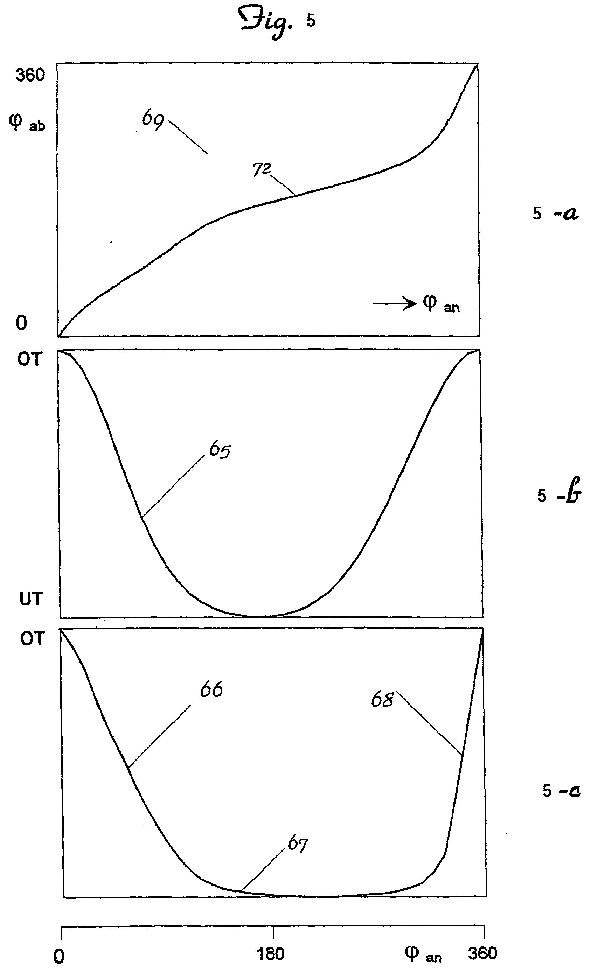

Fig. 3 gibt die Kombination eines unrunden Zahnradpaares 12, 14 mit einer Gelenkpresse, speziell einer schematisch erläuterten Kniehebelpresse 70, an. Mittels der Kombination von speziellen Gelenkantrieben und unrunden Zahnrädern wird es möglich, Wegverläufe für den Pressenstößel zu realisieren, die auf andere Weise kaum realisierbar sind oder aber äußerst aufwendige Gelenkantriebe mit einer größeren Anzahl von Gelenken erfordern. Auch schränkt die Begrenztheit der Auslegung von unrunden Zahnrädern bei ihrem Einsatz in Kurbelpressen mögliche Anwendungsgebiete, wie beispielsweise den Einsatz für den Antrieb von Niederhaltern in Tiefziehpressen ein. Durch die Kombination eines unrunden Zahnradpaares mit einer noch relativ einfach aufgebauten Gelenkpresse, beispielsweise einer Kniehebelpresse 70, wird es möglich, aufwendige und von ihren Steifigkeitsverhalten und Einbaubedingungen her problematische Gelenkantriebe durch einfache Gelenkantriebe zu ersetzen. Beispiele hierfür sind in Fig. 4 bis Fig. 6 angegeben. Bei allen Anwendungen von Fig. 4 bis Fig. 6 werden unrunde Zahnräder mit identischen Wälzkurven entsprechend Fig. 5 eingesetzt. Durch Variieren der Winkelstellung des Exzenters 18 oder durch Winkelversetzen der unrunden Zahnräder 12, 14 auf ihren Wellen bildet sich die Übertragungsfunktion 69 der unrunden Zahnräder 12, 14 entsprechend Fig. 4 bis Fig. 6 aus.

Fig. 4 zeigt die Kombination des unrunden Zahnradpaares 12, 14 mit der Kniehebelpresse 70 nach Fig. 3 (nicht mit dargestellt). Die Winkelstellung der unrunden Zahnräder 12, 14 bzw. des Exzenters 18 wurden dabei so gewählt, daß die Presse über einen längeren Zeitraum mit einer äußerst geringen Stößelgeschwindigkeit arbeitet. Durch das Zusammenfallen des flachen Bereichs 72 der Übertragungsfunktion 69 der unrunden Zahnräder 12, 14 aus Fig. 3 (Diagramm 4-a) mit dem Bereich der Übertragungsfunktion 65 der Kniehebelpresse vor dem unteren Umkehrpunkt (Diagramm 4-b) wird ein extrem flacher Verlauf für den Arbeitshub 67 erzielt (Diagramm 4-c). Ein derartiger Verlauf ist von erheblichem Vorteil bei Umformvorgängen wie Schneiden oder Prägen. Insbesondere bei Schneidvorgängen mit empfindlichen Wekrzeugen, beispielsweise Feinschneidvorgängen, ist ein derartiger Verlauf für den Arbeitsweg der Presse von Vorteil.

Fig. 5 zeigt wieder die Kombination des unrunden Zahnradpaares 12, 14 mit der Kniehebelpresse 70 entsprechend Fig. 3. Die Winkelstellung der unrunden Zahnräder 12, 14 bzw. des Exzenters 18 wurde gegenüber der Ausführung nach Fig. 4 so verändert, daß die Presse über einen langen Zeitraum eine äußerst geringe Stößelgeschwindigkeit im Bereich des unteren Umkehrpunkts aufweist. Dabei wirkt der flache Bereich 72 der übertragungsfunktion 69 (Diagramm 5-a) mit dem Bereich des unteren Umkehrpunkts der Übertragungsfunktion 65 (Diagramm 5-b) des Kniehebels zusammen.

Unter bestimmten Voraussetzungen ist ein derartiger Antrieb für Niederhalter in Tiefziehpressen geeignet. Beim Tiefziehen auf mechanischen Pressen wird heute sehr oft eine hydraulische Regeleinrichtung zur Feineinstellung des Niederhalterdrucks eingesetzt. Bei einer Kombination unrunde Zahnräder im Antrieb - Kniehebelgelenk - hydraulische Regeleinrichtung für den Niederhalterdruck kann damit entsprechend dem Verlauf 67 für den Arbeitshub der Kniehebelpresse mit unrunden Zahnrädern (Diagramm 5-c) auf einen bisher verwendeten aufwendigen Gelenkantrieb verzichtet werden.

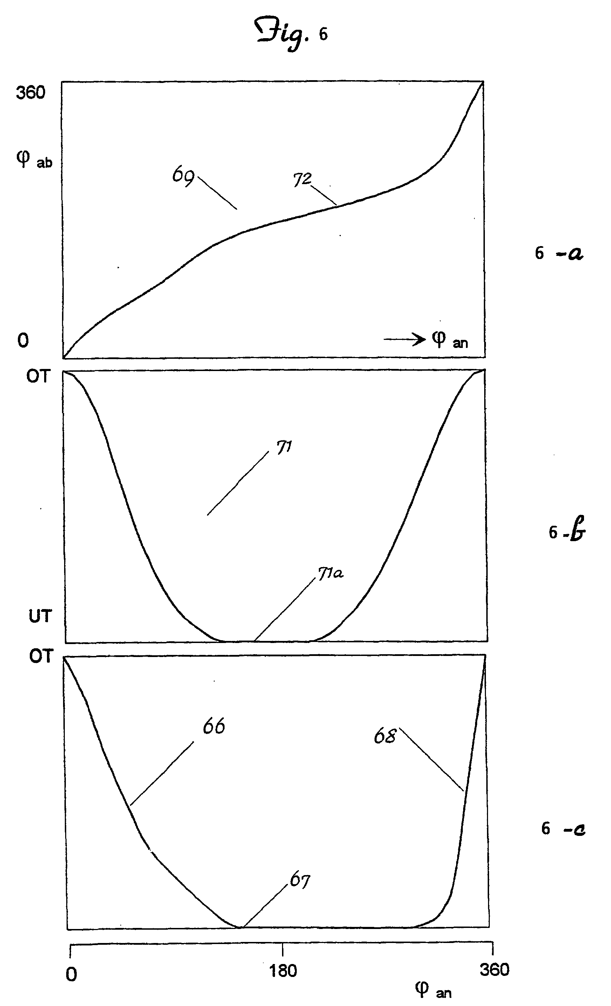

In Fig. 6 ist ein Verlauf für den Stößelweg angegeben, der bei Niederhaltern in Tiefziehpressen erforderlich ist. Der Verlauf entsteht durch die Kombination des unrunden Zahnradpaares 12, 14 nach Fig.3 mit einem nicht näher erläuterten Gelenkantrieb, dessen Übertragungsfunktion im Diagramm 10b angegeben ist. Es können beliebige Gelenkantriebe in Pressen mit unrunden Zahnrädern ausgestattet werden. Auf die Vielzahl von Kombinationsmöglichkeien soll an dieser Stelle nicht näher eingegangen werden.

Es sei an dieser Stelle daher die Übertragungsfunktion 71 eines beispielhaften, nicht näher erläuterten Gelenkantriebs gegeben. Der Gelenkantrieb weist einen kurzen Rastpunkt 71a im unteren Umkehrpunkt auf (Diagramm 6-b). Durch die Kombination der Übertragungsfunktion 69 der unrunden Zahnräder 12, 14 nach Fig. 3 mit der Übertragungsfunktion 71 des nicht näher erläuterten Gelenkantriebs weist der Antrieb im Ergebnis eine ausgeprägte Rast 67 (Diagramm 6-c) auf und ist damit bestens geeignet, den Niederhalter einer Ziehpresse anzutreiben. Damit ist es möglich, anstelle der bisher verwendeten aufwendig gestalteten Gelenkantriebe bei Niederhaltern von Ziehpressen wesentlich einfachere Gelenkantriebe einzusetzen.

Durch die Kombination unrunder Zahnräder mit Gelenkantrieben wird es möglich, den Erfordernissen spezieller, hochentwickelter Umformverfahren durch bestmöglich angepaßte Kurvenverläufe für Stößelweg und Stößelgeschwindigkeit Rechnung zu tragen.

## Patentansprüche

1. Antriebseinrichtung für eine Umformmaschine,
mit einem Drehantrieb und
mit einem Gelenkantrieb für einen Stößel (4), wobei der Gelenkantrieb mit dem Drehantrieb über ein Zahnrad-Getriebe (8) in Antriebsverbindung steht,
und wobei das Zahnrad-Getriebe wenigstens zwei, miteinander in Eingriff stehende unrunde Zahnräder (12, 14) enthält, die dem Gelenkantrieb eine ungleichförmige Antriebsgeschwindigkeit erteilen,
**dadurch gekennzeichnet,**
**daß** das Zahnradgetriebe ein achsenunsymmetrisches unrundes Zahnrad (12 oder 14) mit beliebig angeordnetem Drehpunkt sowie ein damit in Eingriffsverbindung stehendes unrundes Gegenzahnrad (14 oder 12) aufweist.

2. Antriebseinrichtung nach Anspruch 1, **dadurch gekennzeichnet, daß** die Stößelbewegung im Vor- und Rückhub in unterschiedlicher Weise erfolgt.

3. Antriebseinrichtung nach Anspruch 1, **dadurch gekennzeichnet, daß** die zeitliche Lage des unteren Totpunktes des Stößels (4) gegenüber der Mitte des Hubintervalles versetzt angeordnet ist.

4. Antriebseinrichtung nach einem der Ansprüche 1-3, **dadurch gekennzeichnet, daß** sich bei Drehung der Zahnräder (12, 14) wenigstens abschnittsweise (42) ein konvex ausgebildeter Bereich der Wälzkurve eines Zahnrades (12) mit einem konkav ausgebildeten Bereich der Wälzkurve eines anderen Zahnrades (14) in Eingriff befindet zur lokalen Erhöhung der Zahnüberdeckung.

5. Antriebseinrichtung nach einem der vorhergehenden Ansprüche, **dadurch gekennzeichnet, daß** das mittlere Übersetzungsverhältnis des Zahnrad-Getriebes (8) eins oder ein anderes ganzzahliges Verhältnis beträgt.

6. Antriebseinrichtung nach einem der vorhergehenden Ansprüche, **dadurch gekennzeichnet, daß** das periodisch variierende Übersetzungsverhältnis des Zahnrad-Getriebes (8) derart gewählt ist, daß das Übersetzungsverhältnis der unrunden Zahnräder (12, 14) bei Bewegung der Stößels (4) vom oberen Totpunkt (o. T.) zum unteren Totpunkt (u. T.) wenigstens abschnittsweise (32) größer ist als bei Bewegung des Stößels (4) vom unteren Totpunkt zum oberen Totpunkt.

7. Antriebseinrichtung nach einem der vorhergehenden Ansprüche, **dadurch gekennzeichnet, daß** das periodisch variierende Übersetzungsverhältnis des Zahnrad-Getriebes (8) derart gewählt ist, daß die Geschwindigkeit des Stößels (4) bei Bewegung vom oberen Totpunkt zum unteren Totpunkt wenigstens abschnittsweise, insbesondere im Bereich (44) des Arbeitshubes des Stößels (4) im wesentlichen konstant ist.

8. Antriebseinrichtung nach einem der vorhergehenden Ansprüche, **dadurch gekennzeichnet, daß** das periodisch variierende Übersetzungsverhältnis des Zahnrad-Getriebes (8) derart gewählt ist, daß das Übersetzungsverhältnis der unrunden Zahnräder (12, 14) bei Bewegung des Stößels (4) im Bereich des oberen Totpunktes und/oder bei Bewegung im Bereich des unteren Totpunktes wenigstens abschnittsweise größer, vorzugsweise wesentlich größer ist als bei Bewegung im Bereich zwischen den Umkehrpunkten (o. T. und u. T.).

9. Antriebseinrichtung nach einem der Ansprüche 1-5, **dadurch gekennzeichnet, daß** das periodisch variierende Übersetzungsverhältnis des Zahnrad-Getriebes (8) zur Erzielung eines Eilvor- und Eilrücklaufes derart gewählt ist, daß das Übersetzungsverhältnis der unrunden Zahnräder (12, 14) bei Bewegung des Stößels (4) zwischen den Totpunkten im Bereich des oberen Totpunktes wenigstens abschnittsweise groß und bei Bewegung des Stößels (4) im Bereich des Vor- und Rücklaufes klein gewählt ist.

10. Antriebseinrichtung nach einem der vorhergehenden Ansprüche, **dadurch gekennzeichnet, daß** das periodisch variierende Übersetzungsverhältnis des Zahnrad-Getriebes (8) derart gewählt ist, daß die Geschwindigkeit eines mit dem Stößel (4) verbundenen Werkzeuges insbesondere beim Aufsetzen (32) auf das Werkstück wenigstens kurzzeitig durch ein größeres Übersetzungsverhältnis der unrunden Zahnräder (12, 14) verringert ist.

11. Antriebseinrichtung nach einem der Ansprüche 1-5, **dadurch gekennzeichnet, daß** das periodisch variierende Übersetzungsverhältnis des Zahnrad-Getriebes (8) derart gewählt ist, daß die Geschwindigkeit des Werkzeuges durch ein kleineres Übersetzungsverhältnis der unrunden Zahnräder (12, 14) erhöht ist.

12. Antriebseinrichtung nach einem der Ansprüche 1-5, **dadurch gekennzeichnet, daß** das periodisch variierende Übersetzungsverhältnis des Zahnrad-Getriebes (8) derart gewählt ist, daß das Übersetzungsverhältnis der unrunden Zahnräder (12, 14) bei Bewegung des Stößels (4) im Bereich des unteren Totpunktes, insbesondere unmittelbar vor, bei und nach dem Erreichen des unteren Totpunktes, geringer, vorzugsweise wesentlich geringer ist als im Vorlauf- und Rücklaufbereich des Stößels.

13. Antriebseinrichtung nach einem der vorhergehenden Ansprüche, **dadurch gekennzeichnet, daß** das Zahnrad-Getriebe (8) als Umlaufrädergetriebe (46, 48, 50, 52), insbesondere Planetengetriebe, ausgebildet oder mit einem Umlaufrädergetriebe kombiniert ist.

14. Antriebseinrichtung nach einem der vorhergehenden Ansprüche, **dadurch gekennzeichnet, daß** mehrere abwechselnd einkuppelbare Paare unrunder Zahnräder als Schaltgetriebe vorgesehen sind.

15. Antriebseinrichtung nach einem der vorhergehenden Ansprüche, **dadurch gekennzeichnet, daß** die unrunden Zahnräder (12, 14) mit mehr als zwei Gelenkstangen (61, 62, 64) aufweisenden Gelenkantrieben, beispielsweise Knebelantrieben, kombiniert sind, um den Erfordernissen spezieller, hochentwickelter Umformverfahren durch bestmöglich angepaßte Kurvenverläufe für Schlüsselweg und Schlüsselgeschwindigkeit Rechnung zu tragen.

## Claims

1. Drive device for a metal-forming machine tool
with a rotary drive and
with an articulated drive for a ram (4), the articulated drive being in drive connection with the rotary drive via a toothed wheel gear (8)
and the toothed wheel gear having at least two toothed wheels (12, 14) which mesh with each other and lack circularity, providing the articulated drive with a variable drive speed,
**characterised in that**
the toothed wheel gear has a non-circular toothed wheel (12 or 14) which is asymmetrical in respect of the axle, with any desired point of rotation and a non-circular counter gear wheel (14 or 12), which meshes with it.

2. Drive device according to claim 1, **characterised in that** the ram movement takes place in different ways in the advancing and retreating stroke.

3. Drive device according to claim 1, **characterised in that** the time position of the bottom dead centre of the ram (4) is arranged offset in respect of the centre of the stroke interval.

4. Drive device according to one of the claims 1 - 3, **characterised in that** when the toothed wheels (12, 14) rotate, at least in some regions (42), a convex-shaped zone of the working curve of a toothed wheel (12) engages with a concave-shaped zone of the working curve of another toothed wheel (14) to increase the contact ratio locally.

5. Drive device according to one of the preceding claims **characterised in that** the average transmission ratio of the toothed wheel gear (8) is one or another whole number ratio.

6. Drive device according to one of the preceding claims, **characterised in that** the periodically varying transmission ratio of the toothed wheel gear (8) is selected such that the transmission ratio of the non-circular toothed wheels (12, 14) when the ram (4) moves from the upper dead centre (o. T.) to the bottom dead centre (u. T.) is greater than when the ram (4) moves from the bottom dead centre to the upper dead centre, at least in some regions (32).

7. Drive device according to one of the preceding claims, **characterised in that** the periodically varying transmission ratio of the toothed wheel gear (8) is selected such that the speed of the ram (4) when moving from the upper dead centre to the bottom dead centre is substantially constant, at least in some regions, especially within the working stroke zone (44) of the ram (4).

8. Drive device according to one of the preceding claims, **characterised in that** the periodically varying transmission ratio of the toothed wheel gear (8) is selected such that when the ram (4) moves in the upper dead centre zone and/or when moving in the bottom dead centre zone, the transmission ratio of the non-circular toothed wheels (12, 14) is at least larger in some regions, preferably substantially larger, than when moving in the zone between the turnaround points (o.T. and u.T.).

9. Drive device according to one of the claims 1-5, **characterised in that,** to achieve a fast advance and return, the periodically varying transmission ratio of the toothed gear wheel (8) is selected such that when the ram (4) moves between the dead centres in the upper dead centre zone, the transmission ratio of the non-circular toothed wheels (12, 14) is at least large in some regions and when the ram (4) moves in the area of the advance and return it is small.

10. Drive device according to one of the preceding claims, **characterised in that** the periodically varying transmission ratio of the toothed wheel gear (8) is selected such that the speed of a tool connected to the ram (4), is reduced, at least briefly, by a larger transmission ratio for the non-circular toothed wheels (12, 14) especially when in contact (32) with the workpiece.

11. Drive device according to one of the claims 1 - 5, **characterised in that** the periodically varying transmission ratio of the toothed wheel gear (8) is selected such that the speed of the tool is increased by the non-circular toothed wheels (12, 14) having a relatively small transmission ratio.

12. Drive device according to one of the claims 1-5, **characterised in that** the periodically varying transmission ratio of the toothed wheel gear (8) is selected such that when the ram (4) moves in the bottom dead centre zone, especially immediately before, during and after reaching the bottom dead centre, the transmission ratio of the non-circular toothed wheels (12, 14) is smaller, preferably substantially smaller, than in the advance and return zones of the ram.

13. Drive device according to one of the preceding claims, **characterised in that** the toothed wheel gear (8) takes the form of epicyclic gearing (46, 48, 50, 52), especially planetary gearing, or is combined with an epicyclic gearing system.

14. Drive device according to one of the preceding claims **characterised in that** several pairs of non-circular toothed wheels, which can be connected alternately, are provided as the switchgear.

15. Drive device according to one of the preceding claims, **characterised in that** the non-circular toothed wheels (12, 14) are combined with articulated drives with more than two articulated rods (61, 62, 64), for example toggle joint drives, to take account of the requirements of special, highly developed forming processes via the best possible adjustment to curve patterns for the key way and key speed.

## Revendications

1. Dispositif d'entraînement pour une machine de formage,
- avec un entraînement en rotation et
- avec un entraînement à cardan pour un coulisseau (4), l'entraînement à cardan étant en liaison d'entraînement avec l'entraînement en rotation par l'intermédiaire d'une transmission par engrenages (8),
- et la transmission par engrenages contenant au moins deux pignons (12, 14) non circulaires se trouvant en prise l'un avec l'autre, gui communiquent à l'entraînement à cardan une vitesse d'entraînement non uniforme,
**caractérisé en ce que** la transmission par engrenages présente un pignon (12 ou 14) non circulaire non symétrique axialement à axe de rotation disposé de manière quelconque, ainsi qu'un contre-pignon (14 ou 12) non circulaire se trouvant en liaison de prise avec lui.

2. Dispositif d'entraînement selon la revendication 1,
**caractérisé en ce que** le déplacement du coulisseau en courses d'aller et de retour se produit de manières différentes.

3. Dispositif d'entraînement selon la revendication 1,
**caractérisé en ce que** la position dans le temps du point mort bas du coulisseau (4) est disposée décalée par rapport au milieu de l'intervalle de course.

4. Dispositif d'entraînement selon l'une des revendications 1 à 3,
**caractérisé en ce que**, lors de la rotation des pignons (12, 14), une zone formée convexe de la courbe primitive d'un pignon (12) se trouve en prise, au moins par segments (42), avec une zone formée concave de la courbe primitive d'un autre pignon (14) pour l'augmentation locale du recouvrement des dents.

5. Dispositif d'entraînement selon l'une des revendications précédentes,
**caractérisé en ce que** le rapport de transmission moyen de la transmission par engrenages (8) est égal à un ou à un autre rapport de nombre entier.

6. Dispositif d'entraînement selon l'une des revendications précédentes,
**caractérisé en ce que** le rapport de transmission, variant périodiquement, de la transmission par engrenages (8) est choisi de telle manière que le rapport de transmission des pignons (12, 14) non circulaires, lors du déplacement du coulisseau (4) depuis le point mort haut (PMH) jusqu'au point mort bas (PMB), est plus grand, au moins par segments (32), que lors du déplacement du coulisseau (4) depuis le point mort bas jusqu'au point mort haut.

7. Dispositif d'entraînement selon l'une des revendications précédentes,
**caractérisé en ce que** le rapport de transmission, variant périodiquement, de la transmission par engrenages (8) est choisi de telle manière que la vitesse du coulisseau (4) est sensiblement constante, au moins par segments, en particulier dans la zone (44) de la course de travail du coulisseau (4), lors du déplacement depuis le point mort haut jusqu'au point mort bas.

8. Dispositif d'entraînement selon l'une des revendications précédentes,
**caractérisé en ce que** le rapport de transmission, variant périodiquement, de la transmission par engrenages (8) est choisi de telle manière que le rapport de transmission des pignons (12, 14) non circulaires est, lors du déplacement du coulisseau (4) dans la zone du point mort haut et/ou lors du déplacement dans la zone du point mort bas, plus grand que, de préférence considérablement plus grand que, au moins par segments, lors du déplacement dans la zone entre les points de rebroussement (PMH et PMB).

9. Dispositif d'entraînement selon l'une des revendications 1 à 5,
**caractérisé en ce que** le rapport de transmission, variant périodiquement, de la transmission par engrenages (8) est choisi de telle manière que, pour obtenir des courses rapide d'aller et rapide de retour, le rapport de transmission des pignons (12, 14) non circulaires, est choisi grand, au moins par segments, dans la zone du point mort haut lors du déplacement du coulisseau (4) entre les points morts et petit lors du déplacement du coulisseau (4) dans la zone des courses d'aller et de retour.

10. Dispositif d'entraînement selon l'une des revendications précédentes,
**caractérisé en ce que** le rapport de transmission, variant périodiquement, de la transmission par engrenages (8) est choisi de telle manière que la vitesse d'un outil relié au coulisseau (4) est diminuée, en particulier lors de la pose (32) sur la pièce d'oeuvre, au moins à court terme, par un rapport de transmission plus grand des pignons (12, 14) non circulaires.

11. Dispositif d'entraînement selon l'une des revendications 1 à 5,
**caractérisé en ce que** le rapport de transmission, variant périodiquement, de la transmission par engrenages (8) est choisi de telle manière que la vitesse de l'outil est augmentée par un rapport de transmission plus petit des pignons (12, 14) non circulaires.

12. Dispositif d'entraînement selon l'une des revendications 1 à 5,
**caractérisé en ce que** le rapport de transmission, variant périodiquement, de la transmission par engrenages (8) est choisi de telle manière que le rapport de transmission des pignons (12, 14) non circulaires est plus petit, de préférence considérablement plus petit, lors du déplacement du coulisseau (4) dans la zone du point mort bas, en particulier immédiatement avant, pendant et après l'arrivée au point mort bas, que dans les zones d'aller et de retour du coulisseau.

13. Dispositif d'entraînement selon l'une des revendications précédentes,
**caractérisé en ce que** la transmission par engrenages (8) est réalisée sous forme d'engrenage épicycloïdal (46, 48, 50, 52), en particulier d'engrenage planétaire, ou est combinée avec un engrenage épicycloïdal.

14. Dispositif d'entraînement selon l'une des revendications précédentes,
**caractérisé en ce que** plusieurs paires de pignons non circulaires pouvant être accouplés alternativement sont prévues en tant que transmission à changement de vitesse.

15. Dispositif d'entraînement selon l'une des revendications précédentes,
**caractérisé en ce que** les pignons (12, 14) non circulaires sont combinés à des entraînements à cardan présentant au moins deux bielles articulées (61, 62, 64), par exemple des entraînements à genouillères, afin de prendre en compte les conditions de processus de formage spéciaux à fort développement par des allures de courbe adaptées le mieux possible pour la course de clé et la vitesse de clé.
